(19) Europäisches Patentamt
European Patent Office
Office européen des brevets

(11) **EP 3 406 666 B1**

(12) **EUROPEAN PATENT SPECIFICATION**

(45) Date of publication and mention
of the grant of the patent:
**02.09.2020 Bulletin 2020/36**

(51) Int Cl.:
***C08L 23/04*** *(2006.01)*

(21) Application number: **17192787.4**

(22) Date of filing: **22.09.2017**

(54) **PROCESS TO IMPROVE QUALITY OF NON-HOMOGENEOUS RECYCLED POLYETHYLENE BY BLENDING WITH VIRGIN POLYETHYLENE AND ARTICLE MADE FROM THESE BLENDS**

VERFAHREN ZUR VERBESSERUNG DER QUALITÄT VON NICHTHOMOGENEM RECYCELTEM POLYETHYLEN DURCH VERMISCHUNG MIT FRISCHEM POLYETHYLEN UND AUS DIESEN MISCHUNGEN HERGESTELLTER ARTIKEL

PROCÉDÉ POUR AMÉLIORER LA QUALITÉ DE POLYÉTHYLÈNE RECYCLÉ NON HOMOGÈNE PAR MÉLANGE AVEC UN POLYÉTHYLÈNE VIERGE ET ARTICLE FABRIQUÉ À PARTIR DE CES MÉLANGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.11.2018 Bulletin 2018/48**

(73) Proprietor: **Total Research & Technology Feluy 7181 Seneffe (BE)**

(72) Inventor: **TROLEZ, Yves
7181 Arquennes (BE)**

(74) Representative: **Garcia Martin, Margarita
Total Research & Technology Feluy
Patent Department
Zone Industrielle Feluy C
7181 Seneffe (BE)**

(56) References cited:
**EP-A1- 0 588 147      EP-B1- 3 074 464
WO-A1-96/18677      WO-A1-2007/118866
WO-A1-2012/139967      WO-A1-2016/005265
WO-A1-2016/118566      US-B2- 7 393 916**

• **"ASTM D 1238-65T. Tentative method of measuring flow rates of thermoplastics by extrusion plastometer", ASTM DESIGNA, ASTM INTERNATIONAL, US, vol. D 1238-65T, 1 January 1965 (1965-01-01), pages 453-464, XP009096826,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The invention relates to a process for recycling high-density polyethylene (HDPE) waste to obtain a polymer blend having good mechanical properties and low gels.

**BACKGROUND OF THE INVENTION**

Polyethylene is used in the production of various products such as in the production of films.

In our days, it is desirable to attempt to recycle and to reuse plastics materials, commonly known as post-consumer resin (PCR). To improve the mechanical properties of the PCR, it is known to blend it with a virgin resin. An example of such a process is given by document EP3074464 wherein a high-density polyethylene post-consumer resin is blended with a virgin Ziegler-Natta catalysed polyethylene resin having a multimodal molecular weight distribution. The resulting blend is suitable for the production of containers such as bottles and shows good rigidity, good environmental Stress Cracking Resistance and good properties in terms of colour and odour.

However, attempts to recycle plastics materials to make films are difficult because of their lack of homogeneity. This hinders them to be used in film applications. Indeed problems of homogeneity results in defects on the films also called "fish eyes" or "gels", these defects impair the quality and the mechanical properties of the produced films. As a result, the processability of these materials is reduced, and there is no possibility to produce thin films. It could be interesting to find a solution allowing the use of recycled products to produce films or other articles without impacting their quality.

It is an object of the invention to provide such a solution. It is an object of the invention to provide a cure for recycled material that allows the production of articles with low defects such as gels. It is an object of the invention to provide a cure for recycled material that allows the production of articles with low defects such as gels. It is an object of the invention to provide a cure for recycled material that allows the production of articles with low defects such as gels and good mechanical properties.

**SUMMARY OF THE INVENTION**

It has been surprisingly found that it was possible to remove the gels in blends comprising PCR by the addition of a chromium-catalysed polyethylene.

Thus, according to a first aspect, the invention provides a process to produce a polyethylene composition comprising a post-consumer resin (PCR) comprising the steps of:

-    providing a component A being a polyethylene post-consumer resin (PCR) having a $HLMI_A$ ranging from 15 to 70 g/10 min as determined according to ISO 1133 conditions G, at a temperature of 190°C and under a load of 21.6 kg;
-    providing a component B being a chromium-catalysed polyethylene having a $HLMI_B$ of at most 10 g/10 min as determined according to ISO 1133 conditions G, at a temperature of 190°C and under a load of 21.6 kg, and a molecular weight distribution MWD of at least 10, wherein said component B is selected to have a $HLMI_B$ complying with the following relationship:

$$HLMI_B \leq \frac{HLMI_A}{n}$$

with n being at least 5; the component B being provided in pellets or in powder form, and
-    melt-blending components A and B to form a polyethylene composition wherein the content of component B in the polymer composition is ranging from 5 to 50 wt% as based on the total weight of the polyethylene composition.

Surprisingly, it has been found by the Inventor that the addition of a small quantity of a chromium-catalysed polyethylene to post-consumer resins (PCRs) could drastically lower the defects (i.e. fish eyes or gels) presented by the films produced from these post-consumer resins. The invention allows the use of PCRs for the production of articles such as films, bottles or other containers of high quality. The chromium-catalysed polyethylene (component B) acts as a cure to lower the number of defects observed on the articles as compared to the number of defects observed in articles produced in the same conditions with PCRs only. Moreover, the inventor found that the chromium-catalysed polyethylene that may be used as cure should show an important difference of molecular weight (expressed by the HLMI of the resins) with the PCRs. According to the invention, and as demonstrated in the examples, the HLMI of the chromium-catalysed polyethylene is at least five times lower than the HLMI of the PCRs to allow it to act as a cure. This result was unexpected as, from the common general knowledge, an important difference of molecular weight between two components of a blend, generate defects such as fish eyes.

It is noted that it is known from prior art to add chromium-catalysed polyethylene to reduce the number of defects in bimodal compositions or to enhance the mechanical properties such as environmental stress crack resistance. For example, document US 4,536,550 describes a polyethylene composition having three components. Two components (A) and (C) forms a bimodal product produced by a Ziegler catalyst, the third one (B) is a chromium-catalysed polyethylene having a molecular weight that is higher than the molecular weight of component (A) and lower than the molecular weight of component (C). The resulting blend shows high ESCR. This is different from the invention, as the invention provides a blend wherein the chromium-catalysed polyethylene has a molecular weight that is much higher than the molecular weight of the PCR.

WO96/18677 describes a polyethylene composition containing 85-99 wt% of a component A having a bimodal molecular weight distribution and a component B having a unimodal molecular weight distribution. Component B has a molecular weight that is intermediate between the two blocks of component A. Component B is a linear ethylene polymer having a molecular weight between 150,000 and 600,000 Da; a molecular weight distribution between 3.5 and 9.5, a HLMI between 0.5 and 10 g/ 10 min (21.6 kg/190°C) and a density within the range of 910-960 kg/m$^3$. The amount of component B from the end product is between 1-15 wt%. The composition described in this document is different from the invention, as WO96/18677 aims to exclude the chromium-catalysed polyethylene as possible component B.

With preference, one or more of the following embodiments can be used to better define the post-consumer resin (component A) to be used in the inventive process:

- Component A has a HLMI$_A$ of at most 65 g/10 min as determined according to ISO 1133 conditions G, at a temperature of 190°C and under a load of 21.6 kg, preferably of at most 60 g/10 min, more preferably at most 55 g/10 min, and even more preferably at most 50 g/10 min.
- Component A has a HLMI$_A$ of at least 18 g/10 min as determined according to ISO 1133 conditions G, at a temperature of 190°C and under a load of 21.6 kg, preferably of at least 20 g/10 min, and more preferably at least 25 g/10 min.
- Component A has an MI2$_A$ of at most 1.5 g/10 min as determined according to ISO 1133 conditions D, at a temperature of 190°C and under a load of 2.16 kg, preferably of at most 1.3 g/10 min, more preferably at most 1.2 g/10 min, even more preferably at most 1.1 g/10 min, and most preferably of at most 1.0 g/10 min.
- Component A has an MI2$_A$ of at least 0.15 g/10 min as determined according to ISO 1133 conditions D, at a temperature of 190°C and under a load of 2.16 kg, preferably of at least 0.18 g/10 min, more preferably at least 0.20 g/10 min, and even more preferably at least 0.25 g/10 min.
- Component A has a density ranging from 0.820 to 0.980 g/cm$^3$ as determined according to ISO 1183 at a temperature of 23°C.
- Component A has a weight average molecular weight (Mw) of at most 220,000 Da, preferably of at most 200,000 Da, more preferably of at most 180,000 Da.
- Component A is recycled films and has a density ranging from 0.900 to 0.940 g/cm$^3$ as determined according to ISO 1183 at a temperature of 23°C.
- Component A is recycled containers and has a density ranging from 0.940 to 0.970 g/cm$^3$ as determined according to ISO 1183 at a temperature of 23°C.

With preference, one or more of the following embodiments can be used to better define the chromium-catalysed polyethylene (component B) to be used in the inventive process:

- Component B is a polyethylene resin provided in pellets form, or component B is a polyethylene fluff provided in powder form.
- Component B has a HLMI$_B$ of at most 8 g/10 min as determined according to ISO 1133 conditions G, at a temperature of 190°C and under a load of 21.6 kg, preferably of at most 5 g/10 min, more preferably at most 4 g/10 min, even more preferably at most 3 g/10 min, and most preferably of at most 2.5 g/10 min.
- Component B has a HLMI$_B$ of at least 0.5 g/10 min as determined according to ISO 1133 conditions G, at a temperature of 190°C and under a load of 21.6 kg, preferably of at least 0.6 g/10 min, more preferably at least 0.8 g/10 min, even more preferably at least 1.0 g/10 min, and most preferably of at least 1.2 g/10 min.
- Component B is selected to have a HLMI$_B$ complying with the following relationship:

$$HLMI_B \leq \frac{HLMI_A}{n}$$

with n being at least 8, preferably at least 10, more preferably at least 12, and even more preferably at least 15.
- Component B is a homopolymer or a copolymer of ethylene with one or more comonomer selected from the group consisting of $C_3$-$C_{20}$ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.
- Component B has a density ranging from 0,900 to 0,970 g/cm$^3$ as determined according to ISO 1183 at a temperature of 23°C, preferably 0.940 to 0.965 g/cm$^3$, more preferably from 0.945 to 0.960 g/cm$^3$, and even more preferably from 0.950 to 0.955 g/cm$^3$.
- Component B has a weight average molecular weight (Mw) of at least 250,000 Da, preferably of at least 270,000 Da, more preferably of at least 300,000 Da, even more preferably of at least 310,000 Da, most preferably of at least 320,000 Da, and even most preferably of at least 330,000 Da.
- Component B has a molecular weight distribution MWD of at least 11, preferably of at least 12.
- Component B is selected to have a weight average molecular weight (Mw) higher than the weight average molecular weight (Mw) of component A of at least 130,000 Da, preferably of at least 150,000 Da, more preferably of at least 180,000 Da.

With preference, one or more of the following embodiments can be used to better define the inventive process:

- Optionally, component A is submitted to a fine grinding step before being melt-blended, in order to obtain a powder.
- The step of melt blending is performed with a co-rotating twin screw extruder.
- The step of melt blending is performed in an extruder at a screw speed of at least 100 rpm, preferably of at least 120 rpm. For example, the screw speed may be ranging from 150 rpm to 1200 rpm.
- The step of melt-blending is performed with an extruder operated with a specific energy of at least 0.30 kWh/kg, preferably at least 0.32 kWh/kg, more preferably at least 0.34 kWh/kg.
- The step of melt-blending to form a polyethylene composition comprises passing the melted polyethylene composition through one or more screen filters having a mesh size ranging from 40 to 220, preferably from 80 to 200 microns and isolating the filtered polyethylene composition.
- The process further comprises the step of providing one or more components C being one or more virgin polyethylene, and the step of melt-blending comprises blending components A, B and C to form a polyethylene composition wherein the content of component B in the polymer composition is ranging from 5 to 50 wt% as based on the total weight of the polyethylene composition and the content of the one or more components C is ranging from 10 to 65 wt% as based on the total weight of the polyethylene composition, preferably the one or more components C are or comprise polyethylene with a bimodal distribution.
- The process further comprises the step of providing one or more component C being a polyethylene selected from a homopolymer of ethylene and/or a copolymer of ethylene with one or more comonomer selected from the group consisting of $C_3$-$C_{20}$ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.
- The process further comprises the step of blending components A, B and C to form a polyethylene composition wherein said step is performed during the step of melt-blending components A and B and/or in a subsequent step.

With preference, one or more of the following embodiments can be used to better define the polyethylene composition obtained by the inventive process:

- The content of component A in the polyethylene composition is at least 20 wt% as based on the total weight of the polyethylene composition, preferably at least 30 wt%, more preferably at least 50 wt%, even more preferably at least 60 wt%, most preferably at least 75 wt%, and most preferably at least 85 wt%.
- The content of component A in the polyethylene composition is at most 95 wt% as based on the total weight of the polyethylene composition, preferably at most 92 wt%, more preferably at most 90 wt%.
- The content of component B in the polyethylene composition is at least 6 wt% as based on the total weight of the polyethylene composition, preferably at least 8 wt%.
- The content of component B in the polyethylene composition is at most 40 wt% as based on the total weight of the polyethylene composition, preferably at most 30 wt%, more preferably at most 25 wt%, even more preferably at most 20 wt%.
- The polymer composition further comprises a component C being a polyethylene, wherein the content of component C is ranging from 10 to 65 wt% as based on the total weight of the polyethylene composition, preferably from 15 to 50 wt%, more preferably from 20 to 40 wt%.
- The polyethylene composition has a HLMI ranging from 5.0 to 50.0 g/10 min as determined according to ISO 1133 conditions G, at a temperature of 190°C and under a load of 21.6 kg.
- The polyethylene composition has a HLMI of at least 6.0 g/ 10 min as determined according to ISO 1133 conditions G, at a temperature of 190°C and under a load of 21.6 kg, preferably of at least 8.0 g/10 min, more preferably of at least 10.0 g/10 min, even more preferably of at least 12.0 g/10 min, and most preferably of at least 15 g/ 10 min.
- The polyethylene composition has a HLMI of at most 45.0 g/ 10 min as determined according to ISO 1133 conditions G, at a temperature of 190°C and under a load of 21.6 kg, preferably of at most 40.0 g/10 min, and more preferably of at most 35.0 g/10 min.
- The polyethylene composition has a MI2 ranging from 0.05 to 2.00 g/10 min as determined according to ISO 1133 conditions D, at a temperature of 190°C and under a load of 2.16 kg.
- The polyethylene composition has a MI2 of at least 0.06 g/ 10 min as determined according to ISO 1133 conditions D, at a temperature of 190°C and under a load of 2.16 kg, preferably of at least 0.10 g/10 min, and more preferably of at least 0.15 g/10 min.
- The polyethylene composition has a MI2 of at most 0.90 g/ 10 min as determined according to ISO 1133 conditions D, at a temperature of 190°C and under a load of 2.16 kg, preferably of at most 0.80 g/10 min, and more preferably of at most 0.70 g/10 min.
- The polyethylene composition further comprises from 0.1 wt% to 70 wt% relative to the total weight of the composition of a filler being one or more selected from pigments, silica, talc, wollastonite, calcium carbonate, mica, silicates, kaolin, barium sulphate, metal oxides and hydroxides, wood flour, graphite and carbon nanotubes; preferably from 1 wt% to 65 wt% relative to the total weight of the composition, and more preferably from 10 to 50 wt%.
- The polyethylene composition further comprises from 0.1 wt% to 70 wt% relative to the total weight of the composition of a filler being one or more selected from pigments, silica, talc, wollastonite, calcium carbonate, mica, silicates, kaolin, barium sulphate, metal oxides and hydroxides, wood flour, graphite and carbon nanotubes; and the filler is added to the polyethylene composition during the step of melt-blending to form a polyethylene composition and/or in a subsequent step

According to a second aspect, the invention provides a polyethylene composition comprising a post-consumer resin (PCR) produced by a process according to the first aspect.

According to a third aspect, the invention provides the use of a polyethylene composition comprising a post-consumer resin (PCR) produced by a process according to the first aspect to make an article in a process selected from extrusion, blow-moulding, injection, rotomoulding, injection blow moulding, pipe and profile extrusion, cast film extrusion, blown film extrusion or sheet extrusion.

According to a fourth aspect, the invention provides an article produced from the polyethylene composition according to the second aspect or produced from a blend comprising the polyethylene composition according to the second aspect.

With preference, the article is selected from a sheet, a film, a container, a pipe, a profile, or an injected article, preferably the article is a film or a container.

According to a fifth aspect, the invention provides the use of a chromium-catalysed polyethylene in a process to produce a polyethylene composition comprising a polyethylene post-consumer resin (PCR), wherein the use comprises:

- providing a polyethylene post-consumer resin having a $HLMI_A$ ranging from 15 to 70 g/10 min as determined according to ISO 1133 conditions G, at a temperature of 190°C and under a load of 21.6 kg;
- providing a chromium-catalysed polyethylene having a $HLMI_B$ of at most 10 g/10 min as determined according to ISO 1133 conditions G, at a temperature of 190°C and under a load of 21.6 kg, wherein said component B is selected to have a $HLMI_B$ complying with the following relationship:

$$HLMI_B \leq \frac{HLMI_A}{n}$$

with n being at least 5, the component B being provided in pellets or in powder form ; and
- melt-blending the chromium-catalysed polyethylene with the polyethylene post-consumer resin (PCR) to form a polyethylene composition wherein the content of chromium-catalysed polyethylene is ranging from 5 to 50 wt% as based on the total weight of the polymer composition.

In an embodiment, the invention provides the use of a chromium-catalysed polyethylene in a process to produce a polyethylene composition comprising a polyethylene post-consumer resin (PCR), wherein the process is according to the first aspect.

**DETAILED DESCRIPTION OF THE INVENTION**

For the purpose of the invention, the following definitions are given.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the terms "consisting of".

The recitation of numerical ranges by endpoints includes all integer numbers and, where appropriate, fractions subsumed within that range (e.g. 1 to 5 include 1, 2, 3, 4 when referring to, for example, a number of elements, and also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein. Reference throughout this specification to "one embodiment" or "an embodiment" means that a particular feature, structure or characteristic described in connection with the embodiment is included in at least one embodiment of the present invention. The particular features, structures, characteristics or embodiments may be combined in any suitable manner, as would be apparent to a person skilled in the art from this disclosure, in one or more embodiments. Furthermore, while some embodiments described herein include some but not other features included in other embodiment, combinations of features of different embodiments are meant to be within the scope of the invention, and form different embodiments, as would be understood by those in the art.

Unless otherwise defined, all term used in disclosing the invention, including technical and scientific terms, have the meaning as commonly understood by one skilled in the art to which this invention belongs. By means of further guidance, definitions for the terms used in the description are included to better appreciate the teaching of the present invention.

As used herein, the term "melt blending" involves the use of shear force, extensional force, compressive force, thermal energy or combinations comprising at least one of the foregoing forces or forms of energy and is conducted in processing equipment wherein the aforementioned forces are exerted by multiple screws, intermeshing co-rotating or counter rotating screws, non-intermeshing co-rotating or counter rotating screws, reciprocating screws, screws with pins, barrels with pins, rolls, rams, helical rotors, or combinations comprising at least one of the foregoing. It is generally desirable during melt or solution blending of the composition to impart a specific energy of about 0.2 to about 2 kilowatt-hour/kilogram (kwh/kg) of the composition. In a preferred embodiment, melt blending is performed in a co-rotating twin screw extruder.

The terms "polyethylene" (PE) and "ethylene polymer" may be used synonymously. The term "polyethylene" encompasses homopolymer of ethylene as well as copolymer of ethylene which can be derived from ethylene and one or more comonomers selected from the group consisting of $C_3$-$C_{20}$ alpha-olefins, such as propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

As used herein, the term "polyethylene" alone refers to both "polyethylene resin or pellets" and "polyethylene fluff or powder".

The terms "polyethylene fluff" or "polyethylene powder" as used herein refer to polyethylene material with the hard catalyst particle at the core of each grain and is defined as the polymer material after it exits the polymerization reactor (or the final polymerization reactor in the case of multiple reactors connected in series).

The terms "polyethylene resin" as used herein refer to polyethylene fluff or powder that is extruded, and/or melted and/or pelletized and can be produced through compounding and homogenizing of the polyethylene resin as taught herein, for instance, with mixing and/or extruder equipment. As used herein, the terms "polyethylene pellets" refers to a polyethylene resin that has been pelletized.

Under normal production conditions in a production plant, it is expected that the melt index (MI2, HLMI, MI5) will be different for the fluff, than for the polyethylene resin. Under normal production conditions in a production plant, it is expected that the density will be slightly different for the fluff, than for the polyethylene resin. Unless otherwise indicated, density and melt index for the polyethylene resin refer to the density and melt index as measured on the polyethylene resin as defined above. The density of the polyethylene resin refers to the polymer density as such, not including additives such as for example pigments unless otherwise stated.

The terms "high-density polyethylene", which may be abbreviated as "HDPE", are generally used to denote polyethylenes having a density of at least 0.940 g/cm³. The terms "low-density polyethylene", which may be abbreviated as "LDPE", are generally used to denote polyethylenes having a density of at least 0.910 to 0.925 g/cm³. The terms "linear low-density polyethylene", which may be abbreviated as "LLDPE", are generally used to denote polyethylenes having a significant number of short branches and no long branches; and a density of at about 0.920 g/cm³.

The terms "virgin polyethylene" are used to denote a polyethylene directly obtained from an ethylene polymerization plant. The terms "directly obtained" is meant to include that the polyethylene may optionally be passed through a pelletization step or an additivation step or both.

The terms "Post Consumer Resin", which may be abbreviated as "PCR", is used to denote the component of waste, which consists of polyethylene packaging. Said PCR can be HDPE packaging such as bottles or containers such as domestic waste; as well as LDPE and/or LLDPE packaging such as films collected from supermarket. PCR comprising non-black HDPE is preferably selected from dairy packaging waste such as English milk bottle. The selected PCR may comprise up to 10 wt% relative to the total weight of the PCR, of one or more polymers different from polyethylene (for example polypropylene or ethylene-vinyl acetate). The selected PCR may comprise polymers of different densities and/or different molecular weights (for example a mixture of LDPE and LLDPE).

Chromium-based catalyst systems refer to catalysts obtained by deposition of chromium oxide on a support, e.g. a silica or aluminium support.

Ziegler-Natta catalyst systems are generally formed from the combination of a metal component (i.e. a catalyst precursor) with one or more additional components, such as a catalyst support, a cocatalyst and/or one or more electron donors.

Metallocene catalysts are compounds of Group IV transition metals of the Periodic Table such as titanium, zirconium, hafnium, etc., and have a coordinated structure with a metal compound and a ligand composed of one or two groups of cyclopentadienyl, indenyl, fluorenyl or their derivatives.

As used herein, "blend", "polymer blend" and like terms refer to a composition of two or more compounds, for example two or more polymers or one polymer with at least one other compound.

The particular features, structures, characteristics or embodiments may be combined in any suitable manner, as would be apparent to a person skilled in the art from this disclosure, in one or more embodiments.

The invention provides a process to produce a polyethylene composition comprising a post-consumer resin (PCR) comprising the steps of:

- providing a component A being a polyethylene post-consumer resin (PCR) having a $HLMI_A$ ranging from 15 to 70 g/10 min as determined according to ISO 1133 conditions G, at a temperature of 190°C and under a load of 21.6 kg;
- providing a component B being a chromium-catalysed polyethylene having a $HLMI_B$ of at most 10 g/10 min as determined according to ISO 1133 conditions G, at a temperature of 190°C and under a load of 21.6 kg, wherein said component B is selected to have a $HLMI_B$ complying with the following relationship:

$$HLMI_B \leq \frac{HLMI_A}{n}$$

with n being at least 5, the component B being provided in pellets or in powder form; and
- melt-blending components A and B to form a polyethylene composition wherein the content of component B in the polymer composition is ranging from 5 to 50 wt% as based on the total weight of the polyethylene composition.

Selection of the post-consumer resin (component A)

Component A may be provided in flakes or pellets form. Optionally, component A is provided in a powder form. The PCR that is provided in flakes form has been used and collected as waste. If the PCR is further extruded and filtered, it is provided in pellets form.

Component A has a $HLMI_A$ of at most 70 g/10 min as determined according to ISO 1133 conditions G, at a temperature of 190°C and under a load of 21.6 kg, preferably of at most 65 g/10 min, more preferably at most 60 g/10 min, even more preferably at most 55 g/10 min, and most preferably of at most 50 g/10 min.

Component A has a $HLMI_A$ of at least 15 g/10 min as determined according to ISO 1133 conditions G, at a temperature of 190°C and under a load of 21.6 kg, preferably of at least 18 g/10 min, more preferably at least 20 g/10 min, and even more preferably of at least 25 g/10 min.

With preference, component A has an MI2 of at most 1.5 g/10 min as determined according to ISO 1133 conditions D, at a temperature of 190°C and under a load of 2.16 kg, preferably of at most 1.3 g/10 min, more preferably at most 1.2 g/10 min, even more preferably at most 1.1 g/10 min, and most preferably of at most 1.0 g/10 min.

Preferably, component A has an $MI2_A$ of at least 0.15 g/10 min as determined according to ISO 1133 conditions D, at a temperature of 190°C and under a load of 2.16 kg, preferably of at least 0.18 g/10 min, more preferably at least 0.20 g/10 min, and even more preferably at least 0.25 g/10 min.

When component A contains two or more polyethylene resins of different melt index, the MI2 or the HLMI to be considered is the MI2 or the HLMI measured on the mixture of said two or more polyethylene resins.

With preference, component A has a weight average molecular weight (Mw) of at most 220,000 Da, preferably of at most 200,000 Da, more preferably of at most 180,000 Da.

In an embodiment, component A has a monomodal molecular weight distribution. In another embodiment, component A has a multimodal molecular weight distribution, preferably a bimodal molecular weight distribution. Component A may be monomodal or multimodal.

As used herein, the terms "monomodal polyethylene" or "polyethylene with a monomodal molecular weight distribution" refer to polyethylene having one maximum in their molecular weight distribution curve, which is also defined as a unimodal distribution curve. As used herein, the terms "polyethylene with a bimodal molecular weight distribution" or "bimodal polyethylene" refer to polyethylene having a distribution curve being the sum of two unimodal molecular weight distribution curves, and refer to a polyethylene product having two distinct but possibly overlapping populations of polyethylene macromolecules each having different weight average molecular weights.

As used herein, the terms "polyethylene with a multimodal molecular weight distribution" or "multimodal polyethylene" refer to polyethylene with a distribution curve being the sum of at least two, preferably more than two unimodal distribution curves, and refer to a polyethylene product having two or more distinct but possibly overlapping populations of polyethylene macromolecules each having different weight average molecular weights. The multimodal polyethylene can have an "apparent monomodal" molecular weight distribution, which is a molecular weight distribution curve with a single peak and no shoulder. In an embodiment, said polyethylene resin having a multimodal, preferably bimodal, molecular weight distribution can be obtained by physically blending at least two polyethylene fractions.

The density of component A is ranging from 0.820 g/cm$^3$ to 0.980 g/cm$^3$. Preferably, the polyethylene has a density of at most 0.960 g/cm$^3$. Preferably, the polyethylene has a density of at least 0.850 g/cm$^3$, more preferably of at least 0.900 g/cm$^3$, even more preferably of at least 0.910 g/cm$^3$ and most preferably of at least 0.915 g/cm$^3$. The density is determined according to ISO 1183 at a temperature of 23 °C.

In an embodiment, component A is made of recycled films and has a density ranging from 0.900 to 0.940 g/cm$^3$ as determined according to ISO 1183 at a temperature of 23°C.

In another embodiment, component A is made of recycled containers and has a density ranging from 0.940 to 0.970 g/cm$^3$ as determined according to ISO 1183 at a temperature of 23°C.

Component A comprises linear low-density polyethylene (LLDPE), low-density polyethylene (LDPE), medium-density polyethylene (MDPE), high-density polyethylene (HDPE), and mixtures thereof.

Component A comprises one or more polyethylene selected from homopolymers, copolymers of ethylene and at least one comonomer, or mixture thereof. Suitable comonomers comprise but are not limited to aliphatic $C_3$-$C_{20}$ alpha-olefins. Examples of suitable aliphatic $C_3$-$C_{20}$ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The term "copolymer" refers to a polymer which is made by linking ethylene and at least one comonomer in the same polymer chain. The term "homopolymer" refers to a polymer which is made in the absence of comonomer or with less than 0.1 wt%, more preferably less than 0.05 wt%, most preferably less than 0.005 wt% of comonomer as based on the total weight of the copolymer.

In case component A is or comprises an ethylene copolymer, it comprises at least 0.1 wt% of comonomer, preferably at least 1 wt% as based on the total weight of the copolymer. The ethylene copolymer comprises up to 10 wt% of comonomer as based on the total weight of the copolymer, and most preferably up to 6 wt%. In an embodiment of the invention, the comonomer is 1-hexene.

Selection of the chromium-catalysed polyethylene (component B)

The process of the invention provides the blend of the post-consumer resin (i.e. component A) with chromium-catalyzed polyethylene (component B). Such chromium-catalyzed polyethylene is a polyethylene resin, or a polyethylene fluff, produced using a chromium-based catalyst system. Chromium-based catalyst systems (also known in the art as a "Phillips-type catalyst systems") have been known since the 1950's. Any chromium-based catalyst system known in the art can be used to obtain the polyethylene according to the invention. The Chromium-based catalyst systems refer to catalysts obtained by deposition of chromium oxide on a support, e.g. a silica or aluminium support. Illustrative examples of chromium catalysts comprise but are not limited to $CrSiO_2$ or $CrAl_2O_3$.

An example of a particularly preferred chromium-based catalyst is the chromium-based catalyst prepared according to EP 2004704, which is entirely incorporated herein by reference.

Component B has a $HLMI_B$ of at most 10 g/10 min as determined according to ISO 1133 conditions G, at a temperature of 190°C and under a load of 21.6 kg, preferably of at most 8 g/10 min, more preferably at most 5 g/10 min, even more preferably at most 4 g/10 min, most preferably of at most 3 g/ 10 min, and even most preferably of at most 2.5 g/10 min.

Component B has a $HLMI_B$ of at least 0.5 g/10 min as determined according to ISO 1133 conditions G, at a temperature of 190°C and under a load of 21.6 kg, preferably of at least 0.6 g/10 min, more preferably at least 0.8 g/10 min, even more preferably at least 1.0 g/10 min, and most preferably of at least 1.2 g/10 min.

Component B is selected to have a $HLMI_B$ complying with the following relationship:

$$\mathrm{HLMI_B} \leq \frac{\mathrm{HLMI_A}}{\mathrm{n}}$$

with n being at least 5, preferably at least 8, more preferably at least 10, even more preferably at least 12, and most preferably at least 15.

In a preferred embodiment, component B has a weight average molecular weight (Mw) of at least 250,000 Da, preferably of at least 270,000 Da, more preferably of at least 300,000 Da, even more preferably at least 310,000 Da, most preferably at least 320,000 Da, and even most preferably at least 330,000 Da..

Advantageously, component B is selected to have a weight average molecular weight (Mw) being higher than the weight average molecular weight (Mw) of component A of at least 130,000 Da, preferably of at least 150,000 Da, more preferably 180,000 Da .

Component B has a molecular weight distribution (MWD) defined as Mw/Mn, i.e. the ratio of weight average molecular weight (Mw) over number average molecular weight (Mn), of at least 10, preferably of at least 11, more preferably of at least 12.

Component B is a homopolymer or a copolymer of ethylene with at least one comonomer, or mixture thereof. Suitable comonomers comprise, but are not limited to, aliphatic $C_3$-$C_{20}$ alpha-olefins. Examples of suitable aliphatic $C_3$-$C_{20}$ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

Here again, the term "copolymer" refers to a polymer which is made by linking ethylene and at least one comonomer in the same polymer chain. The term homopolymer refers to a polymer which is made in the absence of comonomer or with less than 0.1 wt% as based on the total weight of the copolymer, more preferably less than 0.05 wt%, most preferably less than 0.005 wt% of comonomer.

In case component B is or comprises an ethylene copolymer, it comprises at least 0.1 wt% of comonomer, preferably at least 1 wt% as based on the total weight of the copolymer. The ethylene copolymer comprises up to 10 wt% of comonomer as based on the total weight of the copolymer, and most preferably up to 6 wt%. In an embodiment of the invention, the comonomer is 1-hexene.

Component B has a density ranging from 0,900 to 0,970 g/cm³ as determined according to ISO 1183 at a temperature of 23°C. Preferably, component B is a polyethylene of medium density with a density ranging from 0.940 to 0.965 g/cm³, preferably from 0.945 to 0.960 g/cm³, and more preferably from 0.950 to 0.955 g/cm³.

The process

Optionally, component A is submitted to a fine grinding step before being melt-blended. A fine grinding step results in component A being in the form of a powder.

With preference, the step of melt blending is performed with a co-rotating twin screw extruder.

The step of melt blending is performed in an extruder at a screw speed of at least 100 rpm, preferably of at least 120 rpm. For example, the screw speed may be ranging from 150 rpm to 1200 rpm.

The step of melt-blending is performed with an extruder operated with a specific energy of at least 0.30 kWh/kg, preferably at least 0.32 kWh/kg, more preferably at least 0.34 kWh/kg.

The step of melt-blending to form a polyethylene composition optionally comprises passing the melted polyethylene composition through one or more screen filters having a mesh size ranging from 40 to 220, preferably from 80 to 200 microns and isolating the filtered polyethylene composition.

In an embodiment, the process further comprises the step of providing one or more components C being one or more virgin polyethylenes and the step of melt-blending comprises blending components A, B and C to form a polyethylene composition wherein the content of component B in the polymer composition is ranging from 5 to 50 wt% as based on the total weight of the polyethylene composition, preferably one or more components C are polyethylene with a bimodal distribution

The step of melt-blending components A, B and C to form a polyethylene composition can be done in one or more steps. In a preferred embodiment, it is done in two steps wherein, in a first step components A and B are melt-blended to form a first polyethylene composition, and in a subsequent step, said first polyethylene composition is melt-blended with one or more component C. In another embodiment, it is done in two steps wherein, in a first step components A, B and C are melt-blended to form a first polyethylene composition, and in a subsequent step, said first polyethylene composition is melt-blended with one or more component C, wherein component C is the same or different in the two steps.

In a similar way, the step of melt-blending components A, B, one or more filler and the optional component C, to form a polyethylene composition can be done in one or more steps. In a preferred embodiment, it is done in two steps wherein, in a first step components A and B are melt-blended to form a first polyethylene composition, and in a subsequent step, said first polyethylene composition is melt-blended with one or more filler. In another embodiment, it is done in two steps wherein, in a first step components A, B, one or more filler and the optional component C, are melt-blended to form a first polyethylene composition, and in a subsequent step, said first polyethylene composition is melt-blended with one or more filler and an optional component C, wherein the one or more filler are the same or different in the two steps, and the optional component C is the same or different in the two steps.

Thus in a preferred embodiment The polyethylene composition further comprises from 0.1 wt% to 70 wt% relative to the total weight of the composition of a filler being one or more selected from pigments, silica, talc, wollastonite, calcium carbonate, mica, silicates, kaolin, barium sulphate, metal oxides and hydroxides, wood flour, graphite and carbon nanotubes; and the filler is added to the polyethylene composition during the step of melt-blending components A and B to form a polyethylene composition and/or in a subsequent step.

The process further comprises the step of providing one or more component C being a polyethylene selected from a homopolymer of ethylene and/or a copolymer of ethylene with one or more comonomer selected from propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene.

The polyethylene composition obtained by the process

The content of component A in the polyethylene composition is at least 20 wt% as based on the total weight of the polyethylene composition, preferably at least 30 wt%, more preferably at least 50 wt%, even more preferably at least 60 wt%, most preferably at least 75 wt%, and most preferably at least 85 wt%.

The content of component A in the polyethylene composition is at most 95 wt% as based on the total weight of the polyethylene composition, preferably at most 92 wt%, more preferably at most 90 wt%.

The content of component B in the polyethylene composition is at least 5 wt% as based on the total weight of the polyethylene composition, preferably at least 6 wt%, and more preferably at least 8 wt%.

The content of component B in the polyethylene composition is at most 50 wt% as based on the total weight of the polyethylene composition, preferably at most 45 wt%, more preferably at most 40 wt%, even more preferably at most 35 wt%, most preferably at most 30 wt%, and even most preferably at most 25 wt% or at most 20 wt%.

The polymer composition further comprises a component C being a polyethylene, wherein the content of component C is ranging from 10 to 65 wt% as based on the total weight of the polyethylene composition, preferably from 15 to 50 wt%, more preferably from 20 to 40 wt%.

The polyethylene composition has a HLMI ranging from 5.0 to 50.0 g/10 min as determined according to ISO 1133 conditions G, at a temperature of 190°C and under a load of 21.6 kg.

The polyethylene composition has a HLMI of at least 6.0 g/ 10 min as determined according to ISO 1133 conditions G, at a temperature of 190°C and under a load of 21.6 kg, preferably of at least 8.0 g/10 min, more preferably at least 10.0 g/10 min, even more preferably of at least 12.0 g/10 min, and most preferably of at least 15 g/ 10 min.

The polyethylene composition has a HLMI of at most 45.0 g/ 10 min as determined according to ISO 1133 conditions G, at a temperature of 190°C and under a load of 21.6 kg, preferably of at most 40.0 g/10 min, and more preferably of at most 35.0 g/10 min.

In an embodiment, the polyethylene composition has a MI2 ranging from 0.05 to 2.00 g/10 min as determined according to ISO 1133 conditions D, at a temperature of 190°C and under a load of 2.16 kg.

Preferably, the polyethylene composition has a MI2 of at least 0.06 g/ 10 min as determined according to ISO 1133 conditions D, at a temperature of 190°C and under a load of 2.16 kg, preferably of at least 0.10 g/10 min, and more preferably of at least 0.15 g/10 min.

With preference, the polyethylene composition has a MI2 of at most 0.90 g/ 10 min as determined according to ISO 1133 conditions D, at a temperature of 190°C and under a load of 2.16 kg, preferably of at most 0.80 g/10 min, and more preferably of at most 0.70 g/10 min.

Optionally, the polyethylene composition further comprises from 0.1 wt% to 70 wt% relative to the total weight of the composition, of a filler, depending on the application considered. Preferably, the polyethylene composition further comprises from 1 wt% to 65 wt% of filler relative to the total weight of the composition, and more preferably from 10 to 50 wt%.

The preferred filler may be one or more selected from pigments, silica, talc, wollastonite, calcium carbonate, mica, silicates, kaolin, barium sulphate, metal oxides and hydroxides, wood flours, graphites, carbon nanotubes, and any mixture thereof. In a preferred embodiment, the filler comprises or is wood flour.

The preferred pigments include organic and inorganic substances and are one or more selected from carbon black, $TiO_2$, ZnO, chromium oxides, iron oxides, azo pigments, phthalocyanines, quinacridones, perylene pigments, naphthalene derivates, isoindolines, anthraquinone pigments.

The articles

The invention provides an article produced from the polyethylene composition according to the second aspect or produced from a blend comprising the polyethylene composition according to the second aspect.

With preference, the article is selected from is selected from a sheet, a film, a container, a pipe, a profile or an injected article. Preferably, the article is a film or a container such as a bottle.

**TEST METHODS**

The high load melt index (HLMI) of polyethylene and polyethylene compositions is determined according to the method of standard ISO 1133:2005, conditions G, at a temperature of 190°C and under a load of 21.6 kg.

The melt index (MI2) of polyethylene and polyethylene compositions is determined according to the method of standard ISO 1133:2005, conditions D, at a temperature of 190°C and under a load of 2.16 kg.

The density of the polyethylene is measured according to the method of standard ISO 1183 at a temperature of 23°C.

The molecular weight Mn (number average molecular weight), Mw (weight average molecular weight), Mz (z average molecular weight) and molecular weight distribution d (Mw/Mn) and d' (Mz/Mw) are determined by size exclusion chromatography (SEC) and in particular by gel permeation chromatography (GPC). Briefly, a GPC-IR5 from Polymer Char was used: 10 mg polyethylene sample is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Detector: IR5 Infrared detector (2800-3000 cm$^{-1}$);
- Calibration: Narrow standards of polystyrene (commercially available);
- Calculation for polyethylene: Based on Mark-Houwink relation ($\log_{10}(M_{PE})$ = 0.965909-$\log_{10}(M_{PS})$ - 0,28264); cut off on the low molecular weight end at $M_{PE}$ = 1000.

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

Defects (Fish eye or gel counts) measurement: Defects counts are automatically measured on cast film.

The film is made and analysed on an OCS machine (Optical Control System).

The machine comprises different parts. There is an extruder with a flat 150 mm die followed by two chill rolls and a winder. The film analyser system is made of a halogen lamp and an optical camera mounted opposite to each other. The transparent or translucent film of 50 $\mu$m thickness passes between the lamp and the camera at around 3 m per minute. 5 m$^2$ of the film are analysed.

Only defects bigger than 100 $\mu$m are taken into account by the data analyser and acquisition system.

Results are expressed in term of defect number by square meter. They are classified as a function of size. The surface of each defect is measured by the analyser. The size is calculated as the equivalent diameter of each defect calculated as if it was a perfect disk. The total defect area is the sum of all defect areas on the total surface of the analysed film (in ppm).

The comonomer content of a polyethylene is determined by $^{13}$C-NMR analysis of pellets according to the method described by G.J. Ray et al. in Macromolecules, vol. 10, n° 4, 1977, p. 773-778.

The $^{13}$C-NMR analysis is performed using a 400 MHz or 500 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data is acquired using proton decoupling, 2000 to 4000 scans per spectrum with 10 mm at room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenise the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg to 600 mg of polymer is dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The specific energy is the amount of mechanical energy transferred to the polymer during extrusion, and was calculated with the following formula:

$$ES = Pm/Q$$

Wherein:

ES: Specific Energy (kWh/kg)
Pm: Mechanical Power to rotate extruder screws (kW/h)
Q: Extruder output (kg)

Depending on the type of extruder, Pm was measured by different ways.
Pm is always measured on the extruder electrical engine. Gear box efficiency is not taken into account.

Brabender:

$$Pm = T \times Tmax \times N \times 2 \times Pi/1000$$

T: Torque percentage
Tmax: maximum torque delivered by the electrical engine
N: Screw speed (rpm)

Clextral and Fairex

$$Pm=(U \times I)/1000$$

U: tension measured on electrical engine (V)
I: current intensity measured on electrical engine (A)

The type of extruders used were as follows:

**Brabender:**

Twin Screw Extruder

Type: TSE20/40
Screw diameter: 20 mm
Screw Length: 40 D

**Clextral**

Twin Screw Extruder

Type: BC 45
Screw diameter: 50 mm
Screw Length: 30 D

**Fairex**

Single Screw Extruder

Screw diameter: 30 mm
Screw Length: 30 D

The following non-limiting examples illustrate the invention.

**EXAMPLES**

The advantages of the inventive polyethylene compositions and the technical effect of the addition of chromium-catalyzed polyethylene in the compositions are shown in the following examples.

**Materials**

The post-consumer resins (PCR)

**PCR-1** is pellets made by melt blending of a mixture of recycled LDPE and LLDPE films. The average properties of PCR-1 are a density of 0.925 g/cm$^3$ as determined according to ISO 1183, a HLMI of 38 g/10 min as determined according to ISO 1133/G, an MI2 of 0.8 g/10 min as determined according to ISO 1133/D, an Mw of 95,100 Da and an MWD of 4.8.
**PCR-2** is pellets made from recycled HDPE bottles. The average properties of PCR-2 are a density of 0.962 g/cm$^3$ as determined according to ISO 1183, a HLMI of 41 g/10 min as determined according to ISO 1133/G, an MI2 of 0.55 g/10 min as determined according to ISO 1133/D, an Mw of 123,000 Da and an MWD of 7.7. PCR2 corresponds to PCR3 but has been further extruded.
**PCR-3** is flakes made from recycled HDPE bottles. The average properties of PCR-3 are a density of 0.962 g/cm$^3$ as determined according to ISO 1183, a HLMI of 41 g/10 min as determined according to ISO 1133/G, an MI2 of 0.55 g/10 min as determined according to ISO 1133/D, an Mw of 123,000 Da and an MWD of 7.7.

The polyethylene

**PE-1** is a chromium-catalyzed HDPE commercially available at TOTAL under the commercial name 56020S. PE-1 has a density of 0.952 g/cm3 as determined according to ISO 1183, a HLMI of 2.1 g/10 min as determined according to ISO 1133/G, an MWD of 14 and an Mw of 340,000 Da. PE-1 is provided in powder form.

**PE-2** is a chromium-catalyzed PE commercially available at TOTAL under the commercial name HF 513. PE-2 has a density of 0.934 g/cm3 as determined according to ISO 1183, a HLMI of 14.5 g/10 min as determined according to ISO 1133/G, an MWD of 14 and an Mw of 220,000 Da. PE-2 is provided in pellet form.

**PE-3** is a chromium-catalyzed HDPE commercially available at TOTAL under the commercial name 56020SXP. PE-3 has a density of 0.952 g/cm$^3$ as determined according to ISO 1183, a HLMI of 1.4 g/10 min as determined according to ISO 1133/G, an MWD of 14 and an Mw of 340,000 Da. PE-3 is provided in pellet form.

**PE-4** is a LDPE produced by radical polymerization commercially available at TOTAL under the commercial name 1700 MN 18 C. PE-4 has a density of 0.918 g/cm$^3$ as determined according to ISO 1183 and an MI2 of 70 g/10 min as determined according to ISO 1133/D. PE-4 is provided in pellet form.

**PE-5** is an mLLDPE produced by a metallocene catalyst, commercially available at TOTAL under the commercial name Lumicene Supertough 22ST05. PE-5 has a density of 0.921 g/cm$^3$ as determined according to ISO 1183, an MI2 of 0.5 g/10 min as determined according to ISO 1133/D, an MWD of 3.3 and an Mw of 87,000 Da and a bimodal distribution. PE-5 is provided in pellet form.

**PE-6** is an mLLDPE produced by a metallocene catalyst, commercially available at TOTAL under the commercial name Lumicene mPE M1810EP. PE-4 has a density of 0.917 g/cm$^3$ as determined according to ISO 1183, an MI2 of 1.0 g/10 min as determined according to ISO 1133/D, an MWD of 2.7, and an Mw of 93,000 Da.PE-6 is provided in pellet form.

**BM-PE** is in powder form, and is a bimodal HDPE. BM-PE has a density of 0.959 g/cm3 as determined according to ISO 1183, a HLMI of 26 g/10 min as determined according to ISO 1133/G, an MI2 of 0.27 g/10 min as determined according to ISO 1133/D, an MWD of 13 and an Mw of 171,000.

Example 1: influence of extrusion process and of the choice of the chromium-catalysed polyethylene - tests on PCR-1.

Polyethylene compositions made from a blend of PCR and a chromium-catalyzed polyethylene, as well as PCR alone, were tested for defects (i.e. the number of gels).

When extruded, the products were compounded by a classical twin-extrusion process on an extruder BRABENDER TSE20/40, with or without filtration screen. The barrel temperature used was 230°C and the screw speed was 150 rpm.

E1 to E5 are comparative examples with PCR1 alone (not in a blend). E1 denotes the properties of the starting material without being processed by extrusion. E1 shows a total defect area of about 1.82 % (18,198 ppm). In E2 the product was extruded, which resulted in a strong decrease of the total defect area dividing it by 3. Indeed, E2 shows a defect area of about 0.58 % (5,813 ppm). In E3 to E5 influence of other processing conditions were tested, such as the presence of a filter and/or the grinding of the product before extrusion). This resulted in a further decrease of the total defect area to about 0.5 %.

Table 1a displays the properties of the polyethylene products.

Table 1a

| Test | | | E1 | E2 | E3 | E4 | E5 |
|---|---|---|---|---|---|---|---|
| Composition | PCR1 | wt% | 100 | 100 | 100 | 100 | 100 |
| Extrusion | grinder | | No | No | No | Yes | Yes |
| | output | Kg/h | No | 2.02 | 2.02 | 2.2 | 2.0 |
| | screw speed | rpm | No | 150 | 150 | 150 | 150 |
| | Specific | kWh/kg | No | 0.34 | 0.38 | 0.37 | 0.43 |
| | energy | | | | | | |
| | filter | μm | No | No | 80 | No | 80 |
| OCS | defects > 100 μm /m2 | gels/m$^2$ | 232,393 | 137,895 | 135,862 | 133,183 | 137,719 |
| | defects < 300 μm /m$^2$ | gels/m$^2$ | 158,316 | 117,507 | 118,572 | 116,926 | 122,421 |
| | defects >600 μm /m$^2$ | gels/m$^2$ | 10,426 | 717 | 506 | 429 | 342 |
| | Total defect area | ppm | 18,198 | 5,813 | 5,305 | 5,083 | 5,037 |

E6 and E7 are inventive examples wherein PCR-1 is blended with a chromium-catalyzed polyethylene (PE-1).

It can be seen that addition of 10 wt% of PE-1 results in another important decrease of the total defect area by further dividing them by about 2. E4 and E6 were processed in the same conditions and E4 shows a total defect area of about 0.51 % whereas E6 shows a total defect area of about 0.30 %. E5 and E7 were processed in the same conditions and E5 shows a total defect area of about 0.50 % whereas E7 shows a total defect area of about 0.22 %. When compared to E1, E6 shows a total defect area divided by about 6 and E7 divided by about 8.

E8 and E9 are comparative examples wherein PCR-1 is blended with another polyethylene also being a chromium-catalyzed polyethylene (PE-2). It can be seen that addition of 10 wt% of PE-2 results in a small decrease of the total defect area depending on the extrusion conditions. E2 and E8 were processed in the same conditions and E2 shows a total defect area of about 0.58 % whereas E8 shows a total defect area of about 0.52 %. E3 and E9 were processed in the same conditions and both show a total defect area of about 0.5 % (0.53 % and 0.51 % respectively).

Table 1b displays the properties of the polyethylene compositions produced.

Table 1b

| Test | | | E6 | E7 | E8 | E9 |
|---|---|---|---|---|---|---|
| Composition of the blend | PCR1 | wt% | 90 | 90 | 90 | 90 |
| | PE-1 | wt% | 10 | 10 | - | - |
| | PE-2 | wt% | - | - | 10 | 10 |
| Extrusion | grinder | | Yes | Yes | No | No |
| | output | Kg/h | -nd | 2.2 | 2.2 | 2.2 |
| | screw speed | rpm | 150 | 150 | 150 | 150 |
| | Specific energy | kWh/kg | nd | 0.34 | 0.35 | 0.37 |
| | filter | $\mu$m | No | 80 | No | 80 |
| OCS | defects > 100 | gels/m$^2$ | 81,018 | 67,730 | 127,690 | 134,021 |
| | $\mu$m /m2 | | | | | |
| | defects < 300 $\mu$m /m2 | gels/m$^2$ | 72,335 | 61,902 | 110,257 | 117,975 |
| | defects >600 $\mu$m /m2 | gels/m$^2$ | 291 | 144 | 724 | 519 |
| | Total defect area | ppm | 2,992 | 2,252 | 5,252 | 5,140 |
| | density | g/cm3 | nd | 0.928 | nd | 0.926 |
| | HLMI | g/10 min | nd | 21.5 | nd | 31.7 |
| | MI2 | g/10 min | nd | 0.37 | nd | 0.61 |
| Nd = not determined | | | | | | |

Example 2: influence of the screw speed and of the specific energy during extrusion - tests on PCR-1.

Polyethylene compositions made from a blend of PCR and a chromium-catalyzed polyethylene, as well as PCR alone, were tested for defects (i.e. the number of gels). The products were extruded with the same extruder at the same temperature than in Example 1. In all examples, the same PCR (PCR-1) was used.

E10 and E11 are comparative examples with PCR-1 alone (not in a blend). The difference in the defects observed (as compared to example 1) is resulting from the differences of the starting material as PCR products do not have constant properties. E10 denotes the properties of the starting material without being processed by extrusion. E10 shows a total defect area of about 1.50 % (15,028 ppm). In E11 the product was extruded, which resulted in a huge decrease of the total defect area dividing it by about 9 as compared to E10. Indeed, E11 shows a defect area of about 0.17 % (1,694 ppm). Thus, an effect of the increase of the screw speed and therefore of the specific energy in extrusion process as compared to E1 and E2 (see example 1) can already be seen.

E12 is an inventive example wherein PCR-1 is blended with PE-1. It can be seen that addition of 10 wt% of PE-1 results in another important decrease of the total defect area by further dividing them by about 24 as compared to E10. Indeed, E12 shows a defect area of about 0.06 % (616 ppm).

E13 is an inventive example wherein PCR1 is blended with another chromium-catalyzed polyethylene (PE-3). It can be seen that addition of 10 wt% of PE-3 results in another important decrease of the total defect area by further dividing them by about 37 as compared to E10. Indeed, E13 shows a defect area of about 0.04 % (408 ppm).

E14 is an inventive example wherein PCR1 is blended with PE-1 and PE-4. It can be seen that addition of 10 wt% of PE-1 and 10 wt% of PE-4 results in another decrease of the total defect area by further dividing them by about 15 as compared to E10. Indeed, E14 shows a defect area of about 0.10 % (1,022 ppm).

Table 2 displays the properties of the polyethylene compositions produced.

Table 2

| Test | | | E10 | E11 | E12 | E13 | E14 |
|---|---|---|---|---|---|---|---|
| Composition of the blend | PCR1 | wt% | 100 | 100 | 90 | 90 | 80 |
| | PE-1 | wt% | - | - | 10 | - | 10 |
| | PE-3 | wt% | - | - | - | 10 | - |
| | PE-4 | wt% | - | - | - | - | 10 |
| Extrusion | grinder | | No | No | No | No | No |
| | output | Kg/h | No | 2.3 | 2.3 | 2.3 | 2.3 |
| | screw speed | rpm | No | 400 | 400 | 400 | 400 |
| | Specific energy | kWh/kg | No | 0.85 | 0.98 | 0.97 | 0.86 |
| | filter | $\mu$m | No | 80 | 80 | 80 | 80 |
| OCS | defects > 100 $\mu$m /m2 | gels/m$^2$ | 203,784 | 64,531 | 24,881 | 16,922 | 37,898 |
| | defects < 300 $\mu$m /m2 | gels/m$^2$ | 141,897 | 61,704 | 23,982 | 16,337 | 36,015 |
| | defects >600 $\mu$m /m2 | gels/m$^2$ | 7,786 | 73 | 33 | 21 | 34 |
| | Total defect area | ppm | 15,028 | 1,694 | 616 | 408 | 1,022 |
| | density | g/cm3 | 0.925 | 0.925 | 0.927 | 0.928 | 0.926 |
| | HLMI | g/10 min | 36.9 | 32.6 | 22.9 | 19.2 | 30.1 |
| | MI2 | g/10 min | 0.87 | 0.7 | 0.4 | 0.33 | 0.55 |

Example 3: influence of extrusion process and of the choice of the chromium-catalysed polyethylene - tests on PCR-2.

Polyethylene compositions made from a blend of PCR and a chromium-catalyzed polyethylene, as well as PCR alone, were tested for defects (i.e. the number of gels). The extrusion conditions were the same as in Example 1. In all compositions, the same PCR (PCR-2) was used.

E15 and E16 are comparative examples with PCR-2 alone (not in a blend). E15 denotes the properties of the starting material without being processed by extrusion. E15 shows a total defect area of about 0.47 % (4,749 ppm). In E16 the product was extruded, which resulted in a decrease of the total defect area dividing it by about 3. Indeed, E16 shows a defect area of about 0.16 % (1,619 ppm).

In E17 and E18, PCR-2 is blended with PE-2. It can be seen that addition of 10 wt% of PE-2 results in both cases in a decrease of the total defect area by dividing it by about 4 as compared to E15. This improvement is comparable to extrusion conditions only. It is believed that the improvement showed by E17 and E18 in comparison to E16 is resulting from the presence of a grinding step and because of the dilution.

E19 and E20 are inventive examples wherein PCR-2 is blended with PE-1. The decrease of the total defect area is significant, as the results of E15 are divided by about 20 for E19 and by about 27 for E20. Here again, comparing E19 with E17 and E20 with E18, the influence of the choice of the chromium-catalysed polyethylene can be observed.

Table 3 displays the properties of the polyethylene compositions produced.

Table 3

| Test | | | E15 | E16 | E17 | E18 | E19 | E20 |
|---|---|---|---|---|---|---|---|---|
| Composition of the blend | PCR-2 | wt% | 100 | 100 | 90 | 90 | 90 | 90 |
| | PE-1 | wt% | - | - | - | - | 10 | 10 |
| | PE-2 | wt% | - | - | 10 | 10 | - | - |

(continued)

| Test | | | E15 | E16 | E17 | E18 | E19 | E20 |
|---|---|---|---|---|---|---|---|---|
| Extrusion | grinder | | No | No | Yes | Yes | Yes | Yes |
| | output | Kg/h | No | 2 | 2 | 2 | 2.1 | 2.1 |
| | screw speed | rpm | No | 150 | 150 | 150 | 150 | 150 |
| | Specific energy | kWh/kg | No | 0.37 | 0.39 | 0.42 | 0.40 | 0.44 |
| | filter | $\mu$m | No | No | No | 80 | No | 80 |
| OCS | defects > 100 $\mu$m /m2 | gels/m$^2$ | 103,730 | 51,907 | 37,069 | 38,080 | 6,914 | 5,661 |
| | defects < 300 $\mu$m /m2 | gels/m$^2$ | 88,666 | 48,111 | 34,536 | 35,747 | 6,340 | 5,249 |
| | defects >600 $\mu$m /m2 | gels/m$^2$ | 1,796 | 222 | 181 | 140 | 48 | 27 |
| | Total defect area | ppm | 4,749 | 1,619 | 1,140 | 1,112 | 227 | 175 |
| | density | g/cm3 | nd | nd | nd | 0.959 | nd | 0.961 |
| | HLMI | g/10 min | nd | nd | nd | 41 | nd | 31.7 |
| | MI2 | g/10 min | nd | nd | nd | 0.5 | nd | 0.33 |
| Nd= not determined | | | | | | | | |

Example 4: effect of the form of the chromium-catalyzed polyethylene (pellets or powder)-tests on PCR-2.

Polyethylene compositions made from a blend of PCR and a chromium-catalyzed polyethylene, as well as PCR alone, were tested for defects (i.e. the number of gels). The extrusion conditions were the same as in Example 1, except for the screw speed. In all compositions, the same PCR (PCR-2) was used.

E21 and E22 are comparative examples with PCR-2 alone (not in a blend). E21 denotes the properties of the starting material without being processed by extrusion. E21 shows a total defect area of about 0.46 % (4,591 ppm). In E22 the product was extruded, which resulted in a decrease of the total defect area dividing it by about 2.6. Indeed, E22 shows a defect area of about 0.18 % (1,775 ppm).

In inventive example E23, PCR-2 is blended with PE-1. It can be seen that addition of 10 wt% of PE-1 results in an important decrease of the total defect area by dividing it by about 13 as compared to E21. Indeed, E23 shows a defect area of about 0.03 % (350 ppm).

E24 is an inventive example wherein PCR-2 is blended with PE-3. It can be seen that addition of 10 wt% of PE-3 results in an important decrease of the total defect area by dividing it by about 13 as compared to E21. Indeed, E24 shows a defect area of about 0.03 % (350 ppm).

Table 4 displays the properties of the polyethylene compositions produced.

Table 4

| Test | | | E21 | E22 | E23 | E24 |
|---|---|---|---|---|---|---|
| Composition of the blend | PCR-2 | wt% | 100 | 100 | 90 | 90 |
| | PE-1 | wt% | - | - | 10 | - |
| | PE-3 | wt% | - | - | - | 10 |
| Extrusion | grinder | | No | No | No | No |
| | output | Kg/h | No | 2.3 | 2.3 | 2.3 |
| | screw speed | rpm | No | 150 | 150 | 150 |
| | specific energy | kWh/kg | No | 0.36 | 0.39 | 0.38 |
| | filter | $\mu$m | No | 200 | 200 | 200 |

(continued)

| Test | | | E21 | E22 | E23 | E24 |
|---|---|---|---|---|---|---|
| OCS | defects > 100 μm /m2 | gels/m$^2$ | 107,876 | 55,904 | 10,959 | 10,471 |
| | defects < 300 μm /m2 | gels/m$^2$ | 94,176 | 51,832 | 10,125 | 9,660 |
| | defects >600 μm /m2 | gels/m$^2$ | 1,675 | 291 | 65 | 81 |
| | Total defect area | ppm | 4,591 | 1,775 | 350 | 350 |
| | density | g/cm3 | 0.963 | 0.963 | 0.961 | 0.961 |
| | HLMI | g/10 min | 49 | 45.3 | 31.3 | 30.3 |
| | MI2 | g/10 min | 0.68 | 0.57 | 0.34 | 0.31 |

Example 5: use of a single screw extruder - tests of PCR2.

Polyethylene compositions made from a blend of PCR and a chromium-catalyzed polyethylene, as well as PCR alone, were tested for defects (i.e. the number of gels). The products were compounded by classical single extrusion. In all compositions, the same PCR (PCR-2) was used. The barrel temperature was 230°C

E25 and E26 are comparative examples with PCR-2 alone (not in a blend). E25 denotes the properties of the starting material without being processed by extrusion. E25 shows a total defect area of about 0.50 % (4,978 ppm). In E26 the product was extruded, which resulted in a decrease of the total defect area dividing it by about 1.2. Indeed, E26 shows a defect area of about 0.40 % (3,924 ppm).

It can be seen that in case of E27 the addition of the chromium-catalyzed polyethylene increases the defects in the compound, whereas a further decrease is observed in E28. Without being bound by a theory, it is believed that the mixing brought by a single-screw extruder may be in some cases not sufficient to achieve the targeted homogeneity in the composition.

Table 5 displays the properties of the polyethylene compositions produced.

Table 5

| Test | | | E25 | E26 | E27 | E28 |
|---|---|---|---|---|---|---|
| Composition of the blend | PCR-2 | wt% | 100 | 100 | 90 | 90 |
| | PE-1 | wt% | - | - | - | 10 |
| | PE-3 | wt% | - | - | 10 | - |
| Extrusion | grinder | | No | No | No | No |
| | screw speed | rpm | No | 70 | 70 | 70 |
| | Specific energy | kWh/kg | No | 0.42 | 0.41 | 0.28 |
| | output | Kg/h | No | 4.8 | 4.9 | 5.8 |
| | filter | μm | No | No | No | No |
| OCS | defects > 100 μm /m2 | gels/m$^2$ | 109,654 | 97,013 | 166,491 | 54,164 |
| | defects < 300 μm /m2 | gels/m$^2$ | 94,171 | 85,146 | 129,173 | 45,813 |
| | defects >600 μm /m2 | gels/m$^2$ | 1,990 | 1,135 | 5,419 | 863 |
| | Total defect area | ppm | 4,978 | 3,924 | 10,665 | 2,548 |

Example 6: Use of a single screw extruder - tests on PCR1.

Polyethylene compositions made from a blend of PCR and a chromium-catalyzed polyethylene, as well as PCR alone, were tested for defects (i.e. the number of gels). The products were compounded by classical single screw extrusion in the same extrusions conditions than in Example 5. In all compositions, the same PCR (PCR-1) was used.

E29 and E30 are comparative examples with PCR-1 alone (not in a blend). E29 denotes the properties of the starting material without being processed by extrusion. In E30 the product was extruded, which resulted in a decrease of the total defect area dividing it by about 2.

In both examples E31 and E32, the addition of chromium-catalyzed polyethylene results in an important increase of the defects. Here again, it is believed that the mixing provided by the single-screw extruder is not sufficient to achieve the targeted homogeneity on the compositions.

Table 6 displays the properties of the polyethylene compositions produced.

Table 6

| Test | | | E29 | E30 | E31 | E32 |
|---|---|---|---|---|---|---|
| Composition of the blend | PCR-1 | wt% | 100 | 100 | 90 | 90 |
| | PE-1 | wt% | - | - | - | 10 |
| | PE-3 | wt% | - | - | 10 | - |
| Extrusion | grinder | | No | No | No | No |
| | output | Kg/h | No | nd | 5.3 | 5 |
| | screw speed | rpm | No | 70 | 70 | 70 |
| | Specific energy | kWh/kg | No | nd | 0.38 | 0.40 |
| | filter | $\mu$m | No | No | No | No |
| OCS | defects > 100 $\mu$m /m2 | gels/m$^2$ | 195,441 | 161,923 | 614,112 | 349,505 |
| | defects < 300 $\mu$m /m2 | gels/m$^2$ | 137,210 | 132,713 | 437,468 | 284,963 |
| | defects >600 $\mu$m /m2 | gels/m$^2$ | 6,519 | 1,258 | 37,954 | 8,642 |
| | Total defect area | ppm | 13,870 | 7,548 | 55,772 | 19,297 |

Example 7: effect of the catalyst and of the molecular weight - use of metallocene-catalyzed polyethylene - tests on PCR1.

Polyethylene compositions made from a blend of PCR and a bimodal metallocene PE and from a blend of PCR and a metallocene PE. The extruder used was a Clextral. The screw speed was 100 rpm. The barrel temperature was 230°C. In all compositions, the same PCR (PCR-1) was used.

Table 7 displays the properties of the polyethylene compositions produced.

Table 7

| Test | | | E33 | E34 | E35 | E36 |
|---|---|---|---|---|---|---|
| Composition of the blend | PCR-1 | wt% | 90 | 70 | 90 | 70 |
| | PE-5 | wt% | 10 | 30 | - | - |
| | PE-6 | wt% | - | - | 10 | 30 |
| Extrusion | grinder | | No | No | No | No |
| | output | Kg/h | 18 | 16.1 | 19 | 18.8 |
| | screw speed | rpm | 100 | 100 | 100 | 100 |
| | Specific energy | kWh/kg | 0.48 | 0.47 | 0.45 | 0.46 |
| | filter | $\mu$m | No | No | No | No |
| OCS | defects > 100 $\mu$m /m2 | gels/m$^2$ | 164,052 | 178,590 | 178,540 | 174,764 |
| | defects < 300 $\mu$m /m2 | gels/m$^2$ | 142,008 | 156,074 | 153,957 | 154,957 |
| | defects >600 $\mu$m /m2 | gels/m$^2$ | 893 | 736 | 880 | 491 |
| | Total defect area | ppm | 6,609 | 6,895 | 7,220 | 6,398 |

No specific improvement was found by using PE film grades of HLMI close to PCR-1, made from other catalysts than chromium. Indeed, these results can be compared to E2 of example 1. E2 is related to PCR 1 alone that was extruded in similar conditions than E33 to E36 (use of a twin screw extruder, similar specific energy). It can be seen that the addition of PE5 or PE6 does not improve the results in terms of defects. Indeed E2 shows a total defect area of 5,813 ppm (see table 1a).

To the contrary, the addition of a chromium-catalyzed polyethylene in accordance to the invention results in a clear improvement in terms of defects. In this respect, E33 and E35 can be compared to E6 and E7 (see example 1 table 1b) that show a total defect area of 2,992 ppm and 2,252 ppm respectively.

Example 8: comparison of the effect of the use of a chromium-catalyzed polyethylene according to the invention and of a bimodal polyethylene - tests on PCR-3.

Polyethylene compositions made from a blend of PCR, of a bimodal PE and a chromium-catalyzed polyethylene. The extruder used was a Clextral. The barrel temperature was 230°C. In all compositions, the same PCR (PCR-3) was used.

Table 8 displays the properties of the polyethylene compositions produced.

Table 8

| Test | | | E37 | E38 |
|---|---|---|---|---|
| Composition of the blend | PCR-3 | wt% | 25 | 25 |
| | BM-PE | wt% | 75 | 60 |
| | PE-1 | wt% | - | 15 |
| Extrusion | grinder | | No | No |
| | output | Kg/h | 9.0 | 10.9 |
| | screw speed | rpm | 50 | 75 |
| | Specific energy | kWh/kg | 0.61 | 0.69 |
| | filter | $\mu$m | 200 | 200 |
| OCS | defects > 100 $\mu$m /m2 | gels/m$^2$ | 3,752 | 494 |
| | defects < 300 $\mu$m /m2 | gels/m$^2$ | 3,593 | 459 |
| | defects >600 $\mu$m /m2 | gels/m$^2$ | 21 | 5 |
| | Total defect area | ppm | 88 | 15 |
| | density | g/cm3 | 0.961 | 0.959 |
| | HLMI | g/10 min | 28.5 | 14,8 |

E37 is a comparative example and E38 is an inventive example. The results demonstrated here again the influence of the use of a chromium-catalyzed polyethylene on the gels even in case the composition further contains a bimodal polyethylene.

**Claims**

1. Process to produce a polyethylene composition comprising a post-consumer resin (PCR) **characterised in that** it comprises the steps of:

- providing a component A being a polyethylene post-consumer resin (PCR) having a $HLMI_A$ ranging from 15 to 70 g/10 min as determined according to ISO 1133 conditions G, at a temperature of 190°C and under a load of 21.6 kg;
- providing a component B being a chromium-catalysed polyethylene having a $HLMI_B$ of at most 10 g/10 min as determined according to ISO 1133 conditions G, at a temperature of 190°C and under a load of 21.6 kg, and a molecular weight distribution MWD of at least 10, wherein said component B is selected to have a $HLMI_B$ complying with the following relationship:

$$HLMI_B \leq \frac{HLMI_A}{n}$$

with n being at least 5, the component B being provided in pellets or in powder form; and
- melt-blending components A and B to form a polyethylene composition wherein the content of component B in the polymer composition is ranging from 5 to 50 wt% as based on the total weight of the polyethylene composition.

2.  The process according to claim 1 **characterized in that** the step of melt blending is performed with a co-rotating twin screw extruder.

3.  The process according to any one of claim 1 or 2 **characterized in that** the step of melt-blending is performed with an extruder operated with a specific energy of at least 0.30 kWh/kg.

4.  The process according to any one of claims 1 to 3 **characterized in that** component B is selected to have a $HLMI_B$ complying with the following relationship:

$$HLMI_B \leq \frac{HLMI_A}{n}$$

with n being at least 10, preferably at least 15.

5.  The process according to any one of claims 1 to 4 **characterized in that** component A has:

    - a $HLMI_A$ of at most 60 g/10 min as determined according to ISO 1133 conditions G, at a temperature of 190°C and under a load of 21.6 kg, preferably of at most 50 g/10 min ; and/or
    - a $HLMI_A$ of at least 18 g/10 min as determined according to ISO 1133 conditions G, at a temperature of 190°C and under a load of 21.6 kg, preferably of at least 20 g/10 min.

6.  The process according to any one of claims 1 to 5 **characterized in that** component B has:

    - a $HLMI_B$ of at most 5 g/10 min as determined according to ISO 1133 conditions G, at a temperature of 190°C and under a load of 21.6 kg, preferably of at most 3 g/10 min ; and/or
    - a $HLMI_B$ of at least 0.5 g/10 min as determined according to ISO 1133 conditions G, at a temperature of 190°C and under a load of 21.6 kg, preferably of at least 1.0 g/10min.

7.  The process according to any one of claims 1 to 6 **characterized in that** the polyethylene composition has a HLMI ranging from 5.0 to 50.0 g/10 min as determined according to ISO 1133 conditions G, at a temperature of 190°C and under a load of 21.6 kg.

8.  The process according to any one of claims 1 to 7 **characterized in that** the step of melt-blending to form a polyethylene composition comprises passing the melted polyethylene composition through one or more screen filters having a mesh size ranging from 40 to 220 microns and isolating the filtered polyethylene composition.

9.  The process according to any one of claims 1 to 8 **characterized in that** the process further comprises the step of providing one or more components C being one or more virgin polyethylene and the step of melt-blending comprises blending components A, B and C to form a polyethylene composition wherein the content of component B in the polymer composition is ranging from 5 to 50 wt% as based on the total weight of the polyethylene composition and the content of the one or more components C is ranging from 10 to 65 wt% as based on the total weight of the polyethylene composition, preferably the one or more components C are or comprise a polyethylene with a bimodal distribution

10. The process according to any one of claims 1 to 9 **characterized in that** the content of component B in the polyethylene composition is at least 8 wt% as based on the total weight of the polyethylene composition; and/or content of component B in the polyethylene composition is at most 20 wt% as based on the total weight of the polyethylene composition.

11. The process according to any one of claims 1 to 10 **characterized in that** component B has a density ranging from 0,900 to 0,970 g/cm$^3$ as determined according to ISO 1183 at a temperature of 23°C, preferably 0.940 to 0.965 g/cm$^3$.

12. The process according to any one of claims 1 to 11 **characterized in that** component B is selected to have a weight average molecular weight (Mw) being higher than the weight average molecular weight (Mw) of component A of at least 130,000 Da.

13. The process according to any one of claims 1 to 12 **characterized in that** the polyethylene composition further comprises from 0.1 wt% to 70 wt% relative to the total weight of the composition of a filler being one or more selected from pigments, silica, talc, wollastonite, calcium carbonate, mica, silicates, kaolin, barium sulphate, metal oxides and hydroxides, wood flour, graphite and carbon nanotubes, with preference the filler is added to the polyethylene composition during the step of melt-blending to form a polyethylene composition and/or in a subsequent step.

14. An article produced from the polyethylene composition produced from the process according to any one of claims 1 to 13, or produced from a blend comprising the polyethylene composition produced from the process according to any one of claims 1 to 13; with preference the article is selected from is selected from a sheet, a film, a container, a pipe, a profile or a injected article.

15. Use of a chromium-catalysed polyethylene in a process to produce a polyethylene composition comprising a polyethylene post-consumer resin (PCR), **characterized in that** the process is according to any one of claims 1 to 13.


**Patentansprüche**

1. Verfahren zum Herstellen einer Polyethylenzusammensetzung, umfassend ein gebrauchtes Harz (post-consumer resin, PCR), **dadurch gekennzeichnet, dass** es die Schritte umfasst:

   - Bereitstellen eines Bestandteils A, bei dem es sich um ein gebrauchtes Polyethylenharz (PCR) handelt, das einen HLMI$_A$ im Bereich von 15 bis 70 g/10 min aufweist, der nach ISO-1133-Bedingungen G bei einer Temperatur von 190 °C und unter einer Last von 21,6 kg bestimmt wurde;
   - Bereitstellen eines Bestandteils B, bei dem es sich um ein mit Chrom katalysiertes Polyethylen handelt, das einen HLMI$_B$ von höchstens 10 g/10 min, der nach ISO-1133-Bedingungen G bei einer Temperatur von 190 °C und unter einer Last von 21,6 kg bestimmt wurde, und eine Molmassenverteilung (molecular weight distribution, MWD) von mindestens 10 aufweist, wobei der Bestandteil B so ausgewählt ist, dass er einen HLMI$_B$ aufweist, der der folgenden Beziehung entspricht:

$$HLMI_B \leq \frac{HLMI_A}{n}$$

   wobei n mindestens 5 beträgt, wobei der Bestandteil B in Pellets oder in Pulverform bereitgestellt wird; und
   - Schmelzmischen der Bestandteile A und B, um eine Polyethylenzusammensetzung zu bilden, wobei der Gehalt des Bestandteils B in der Polymerzusammensetzung bezogen auf das Gesamtgewicht der Polyethylenzusammensetzung im Bereich von 5 bis 50 Gew.-% liegt.

2. Verfahren nach Anspruch 1, **dadurch gekennzeichnet, dass** der Schritt des Schmelzmischens mit einem Gleichdrall-Doppelschneckenextruder durchgeführt wird.

3. Verfahren nach einem der Ansprüche 1 oder 2, **dadurch gekennzeichnet, dass** der Schritt des Schmelzmischens mit einem Extruder durchgeführt wird, der mit einer spezifischen Energie von mindestens 0,30 kWh/kg betrieben wird.

4. Verfahren gemäß einem der Ansprüche 1 bis 3, **dadurch gekennzeichnet, dass** der Bestandteil B so ausgewählt ist, dass er einen HLMI$_B$ aufweist, der der folgenden Beziehung entspricht:

$$HLMI_B \leq \frac{HLMI_A}{n}$$

wobei n mindestens 10, vorzugsweise mindestens 15 beträgt.

5. Verfahren nach einem der Ansprüche 1 bis 4, **dadurch gekennzeichnet, dass** der Bestandteil A aufweist:

- einen $HLMI_A$ von höchstens 60 g/10 min, vorzugsweise von höchstens 50 g/10 min, der gemäß ISO-1133-Bedingungen G bei einer Temperatur von 190 °C und unter einer Last von 21,6 kg bestimmt wurde; und/oder
- einen $HLMI_A$ von mindestens 18 g/10 min, vorzugsweise von mindestens 20 g/10 min, der gemäß ISO-1133-Bedingungen G bei einer Temperatur von 190 °C und unter einer Last von 21,6 kg bestimmt wurde.

6. Verfahren nach einem der Ansprüche 1 bis 5, **dadurch gekennzeichnet, dass** der Bestandteil B aufweist:

- einen $HLMI_B$ von höchstens 5 g/10 min, vorzugsweise von höchstens 3 g/10 min, der gemäß ISO-1133-Bedingungen G bei einer Temperatur von 190 °C und unter einer Last von 21,6 kg bestimmt wurde; und/oder
- einen $HLMI_B$ von mindestens 0,5 g/10 min, vorzugsweise von mindestens 1,0 g/10 min, der gemäß ISO-1133-Bedingungen G bei einer Temperatur von 190 °C und unter einer Last von 21,6 kg bestimmt wurde.

7. Verfahren nach einem der Ansprüche 1 bis 6, **dadurch gekennzeichnet, dass** die Polyethylenzusammensetzung einen HLMI im Bereich von 5,0 bis 50,0 g/10 min aufweist, der nach ISO-1133-Bedingungen G bei einer Temperatur von 190 °C und unter einer Last von 21,6 kg bestimmt wurde.

8. Verfahren nach einem der Ansprüche 1 bis 7, **dadurch gekennzeichnet, dass** der Schritt des Schmelzmischens, um eine Polyethylenzusammensetzung zu bilden, das Leiten der geschmolzenen Polyethylenzusammensetzung durch einen oder mehrere Siebfilter, die eine Maschengröße im Bereich von 40 bis 220 Mikrometern aufweisen, und das Isolieren der gefilterten Polyethylenzusammensetzung umfasst.

9. Verfahren nach einem der Ansprüche 1 bis 8, **dadurch gekennzeichnet, dass** das Verfahren ferner den Schritt des Bereitstellens einer oder mehrerer Bestandteile C umfasst, bei denen es sich um ein oder mehrere frische Polyethylene handelt, und der Schritt des Schmelzmischens das Mischen der Bestandteile A, B und C umfasst, um eine Polyethylenzusammensetzung zu bilden, wobei der Gehalt des Bestandteils B in der Polymerzusammensetzung bezogen auf das Gesamtgewicht der Polyethylenzusammensetzung im Bereich von 5 bis 50 Gew.-% liegt und der Gehalt des einen oder der mehreren Bestandteile C bezogen auf das Gesamtgewicht der Polyethylenzusammensetzung im Bereich von 10 bis 65 Gew.-% liegt, wobei vorzugsweise der eine oder die mehreren Bestandteile C ein Polyethylen mit einer bimodalen Verteilung sind oder dieses umfassen.

10. Verfahren nach einem der Ansprüche 1 bis 9, **dadurch gekennzeichnet, dass** der Gehalt des Bestandteils B in der Polyethylenzusammensetzung bezogen auf das Gesamtgewicht der Polyethylenzusammensetzung mindestens 8 Gew.-% beträgt; und/oder der Gehalt des Bestandteils B in der Polyethylenzusammensetzung bezogen auf das Gesamtgewicht der Polyethylenzusammensetzung höchstens 20 Gew.-% beträgt.

11. Verfahren nach einem der Ansprüche 1 bis 10, **dadurch gekennzeichnet, dass** der Bestandteil B eine Dichte im Bereich von 0,900 bis 0,970 g/cm$^3$, vorzugsweise von 0,940 bis 0,965 g/cm$^3$ aufweist, die nach ISO 1183 bei einer Temperatur von 23 °C bestimmt wurde.

12. Verfahren nach einem der Ansprüche 1 bis 11, **dadurch gekennzeichnet, dass** der Bestandteil B so ausgewählt ist, dass er ein Gewichtsmittel der Molmasse (molecular weight, Mw) aufweist, das höher als das Gewichtsmittel der Molmasse (Mw) des Bestandteils A von mindestens 130.000 Da ist.

13. Verfahren nach einem der Ansprüche 1 bis 12, **dadurch gekennzeichnet, dass** die Polyethylenzusammensetzung ferner bezogen auf das Gesamtgewicht der Zusammensetzung 0,1 Gew.-% bis 70 Gew.-% eines Füllstoffs umfasst, bei dem es sich um einen oder mehrere handelt, der/die ausgewählt ist/sind aus Pigmenten, Siliciumdioxid, Talkum, Wollastonit, Calciumcarbonat, Glimmer, Silikaten, Kaolin, Bariumsulfat, Metalloxiden und -hydroxiden, Holzmehl, Graphit und Kohlenstoffnanoröhrchen, wobei vorzugsweise der Füllstoff der Polyethylenzusammensetzung während des Schmelzmischschritts zugesetzt wird, um eine Polyethylenzusammensetzung zu bilden, und/oder in einem nachfolgenden Schritt.

14. Artikel, hergestellt aus der Polyethylenzusammensetzung, die gemäß dem Verfahren nach einem der Ansprüche 1 bis 13 oder aus einer Mischung hergestellt wurde, die die Polyethylenzusammensetzung umfasst, die gemäß dem Verfahren nach einem der Ansprüche 1 bis 13 hergestellt wurde; wobei der Artikel vorzugsweise ausgewählt ist aus einer Bahn, einer Folie, einem Behälter, einem Rohr, einem Profil oder einem eingespritzten Artikel.

**15.** Verwendung eines mit Chrom katalysierten Polyethylens in einem Verfahren zum Herstellen einer Polyethylenzusammensetzung, die ein gebrauchtes Polyethylenharz (PCR) umfasst, **dadurch gekennzeichnet, dass** das Verfahren einem der Ansprüche 1 bis 13 entspricht.

**Revendications**

**1.** Procédé de production d'une composition de polyéthylène comprenant une résine post-consommation (PCR) **caractérisé en ce qu'**il comprend les étapes de :

- fourniture d'un composant A qui est une résine post-consommation (PCR) de polyéthylène ayant un $HLMI_A$ compris dans la plage de 15 à 70 g/10 min tel que déterminé selon la norme ISO 1133, conditions G, à une température de 190 °C et sous une charge de 21,6 kg ;
- fourniture d'un composant B qui est un polyéthylène catalysé par du chrome ayant un $HLMI_B$ d'au plus 10 g/10 min tel que déterminé selon la norme ISO 1133, conditions G, à une température de 190 °C et sous une charge de 21,6 kg et une distribution des poids moléculaires MWD d'au moins 10, ledit composant B étant choisi pour avoir un $HLMI_B$ conforme à la relation suivante :

$$HLMI_B \leq \frac{HLMI_A}{n}$$

avec n valant au moins 5, le composant B étant fourni sous forme de pastilles ou sous forme de poudre ; et
- mélange à l'état fondu des composants A et B pour former une composition de polyéthylène, la teneur en composant B dans la composition de polymère étant comprise dans la plage de 5 à 50 % en poids sur la base du poids total de la composition de polyéthylène.

**2.** Procédé selon la revendication 1 **caractérisé en ce que** l'étape de mélange à l'état fondu est effectuée avec une extrudeuse à double vis co-rotative.

**3.** Procédé selon l'une quelconque des revendications 1 ou 2 **caractérisé en ce que** l'étape de mélange à l'état fondu est effectuée avec une extrudeuse fonctionnant avec une énergie spécifique d'au moins 0,30 kWh/kg.

**4.** Procédé selon l'une quelconque des revendications 1 à 3 **caractérisé en ce que** le composant B est choisi pour avoir un $HLMI_B$ conforme à la relation suivante :

$$HLMI_B \leq \frac{HLMI_A}{n}$$

avec n valant au moins 10, de préférence au moins 15.

**5.** Procédé selon l'une quelconque des revendications 1 à 4 **caractérisé en ce que** le composant A a :

- un $HLMI_A$ d'au plus 60 g/10 min tel que déterminé selon la norme ISO 1133, conditions G, à une température de 190 °C et sous une charge de 21,6 kg, de préférence d'au plus 50 g/10 min ; et/ou
- un $HLMI_A$ d'au moins 18 g/10 min tel que déterminé selon la norme ISO 1133, conditions G, à une température de 190 °C et sous une charge de 21,6 kg, de préférence d'au moins 20 g/10 min.

**6.** Procédé selon l'une quelconque des revendications 1 à 5 **caractérisé en ce que** le composant B a :

- un $HLMI_B$ d'au plus 5 g/10 min tel que déterminé selon la norme ISO 1133, conditions G, à une température de 190 °C et sous une charge de 21,6 kg, de préférence d'au plus 3 g/10 min ; et/ou
- un $HLMI_B$ d'au moins 0,5 g/10 min tel que déterminé selon la norme ISO 1133, conditions G, à une température de 190 °C et sous une charge de 21,6 kg, de préférence d'au moins 1,0 g/10 min.

7. Procédé selon l'une quelconque des revendications 1 à 6 **caractérisé en ce que** la composition de polyéthylène a un HLMI compris dans la plage de 5,0 à 50,0 g/10 min tel que déterminé selon la norme ISO 1133, conditions G, à une température de 190 °C et sous une charge de 21,6 kg.

8. Procédé selon l'une quelconque des revendications 1 à 7 **caractérisé en ce que** l'étape de mélange à l'état fondu pour former une composition de polyéthylène comprend le passage de la composition de polyéthylène fondue à travers un ou plusieurs filtres à tamis ayant un maillage compris dans la plage de 40 à 220 $\mu$m et l'isolement de la composition de polyéthylène filtrée.

9. Procédé selon l'une quelconque des revendications 1 à 8 **caractérisé en ce que** le procédé comprend en outre l'étape de fourniture d'un ou plusieurs composants C qui sont un ou plusieurs polyéthylènes vierges et l'étape de mélange à l'état fondu comprend le mélange des composants A, B et C pour former une composition de polyéthylène, la teneur en composant B dans la composition de polymère étant comprise dans la plage de 5 à 50 % en poids sur la base du poids total de la composition de polyéthylène et la teneur en un ou plusieurs composants C étant comprise dans la plage de 10 à 65 % en poids sur la base du poids total de la composition de polyéthylène, de préférence le ou les composants C sont ou comprennent un polyéthylène ayant une distribution bimodale.

10. Procédé selon l'une quelconque des revendications 1 à 9 **caractérisé en ce que** la teneur en composant B dans la composition de polyéthylène est d'au moins 8 % en poids sur la base du poids total de la composition de polyéthylène ; et/ou la teneur en composant B dans la composition de polyéthylène est d'au plus 20 % en poids sur la base du poids total de la composition de polyéthylène.

11. Procédé selon l'une quelconque des revendications 1 à 10 **caractérisé en ce que** le composant B a une densité comprise dans la plage de 0,900 à 0,970 g/cm$^3$ telle que déterminée selon la norme ISO 1183 à une température de 23 °C, de préférence de 0,940 à 0,965 g/cm$^3$.

12. Procédé selon l'une quelconque des revendications 1 à 11 **caractérisé en ce que** le composant B est choisi pour avoir un poids moléculaire moyen en poids (Mw) supérieur au poids moléculaire moyen en poids (Mw) du composant A d'au moins 130 000 Da.

13. Procédé selon l'une quelconque des revendications 1 à 12 **caractérisé en ce que** la composition de polyéthylène comprend en outre de 0,1 % en poids à 70 % en poids par rapport au poids total de la composition d'une charge qui est une ou plusieurs choisies parmi les pigments, la silice, le talc, la wollastonite, le carbonate de calcium, le mica, les silicates, le kaolin, le sulfate de baryum, les oxydes et hydroxydes métalliques, la farine de bois, les nanotubes de carbone et graphite, de préférence la charge est ajoutée à la composition de polyéthylène lors de l'étape de mélange à l'état fondu pour former une composition de polyéthylène et/ou lors d'une étape ultérieure.

14. Article produit à partir de la composition de polyéthylène produite à partir du procédé selon l'une quelconque des revendications 1 à 13 ou produit à partir d'un mélange comprenant la composition de polyéthylène produite à partir du procédé selon l'une quelconque des revendications 1 à 13 ; de préférence, l'article choisi est choisi parmi une feuille, un film, un récipient, un tuyau, un profilé ou un article injecté.

15. Utilisation d'un polyéthylène catalysé par le chrome dans un procédé pour produire une composition de polyéthylène comprenant une résine post-consommation (PCR) de polyéthylène, **caractérisée en ce que** le procédé est selon l'une quelconque des revendications 1 à 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3074464 A
- US 4536550 A
- WO 9618677 A
- EP 2004704 A

**Non-patent literature cited in the description**

- **G.J. RAY et al.** *Macromolecules,* 1977, vol. 10 (4), 773-778